# EUROPEAN PATENT APPLICATION

(11) **EP 2 800 036 A1**
(43) Date of publication of application: **05.11.2014**
(21) Application number: 14164977.2
(22) Date of filing: 13.07.2011
(51) Int. Cl.: G06Q 10/06, G06Q 30/02, G06Q 99/00

(54) **Method for promoting the responsible exploitation of space and board of trade**

(30) Priority: 28.10.2010 US 407652 P
(62) Divisional of application: 11173775.5
(71) Applicant: Wilson, Bernhard R., Port Credit, Mississauga, Ontario L5G 0A3 (CA)
(72) Inventor: Wilson, Bernhard R., Port Credit, Mississauga, Ontario L5G 0A3 (CA)
(74) Representative: Brann AB

(57) **Abstract**

An improved Board of Trade is disclosed. The Board is of the type which promulgates a code of conduct for its members. The improvement comprises including, in the code: standards of conduct regarding activity in space; and; on the part of any member having control of a rocket for entering space, an obligation to refrain from assisting any person in activity in violation of the standards of conduct regarding activity in space. Also disclosed is a method for promoting the responsible exploitation of space. The method comprises the steps of: promulgating a code of conduct regarding space activity; including in the code an obligation to sanction persons who violate the code; including in the code an obligation to refrain from assisting any person in activity violating the code; and including in the code an obligation to refrain from assisting any person in space-related activities who refuses to be code bound.

## Description

### FIELD OF INVENTION

This relates to methods for enhancing the public good and, in particular, to a method for promoting the responsible exploitation of space for business, medical, research and other purposes.

### BACKGROUND OF THE INVENTION

Space, which for the purpose of the present disclosure and claims refers to everything in the universe outside terrestrial earth that is accessible by rocket, including but not limited to orbital space and the moon, is common property for use by all of humankind. However, the amount of space is not unlimited and some problems have resulted from its status as common property.

One well-known problem is the promulgation of orbital debris, i.e. objects in orbit that have no useful purpose. The number of such objects has significantly increased over the years as space travel has become more common and orbital debris has now become so widespread that it poses a significant damage risk to satellites and orbiting spaceships. Some have predicted that orbital debris may reach a critical density where the creation of new debris occurs faster than the forces which remove the debris from orbit. This could render orbital space relatively useless for many years.

Another problem is competing claims to extraterrestrial property, such as orbital pathways and lunar real estate and mineral rights.

In terms of the former, because useful orbital pathways are becoming so crowded, it is presently not uncommon for satellites in orbital space to pass within several kilometres of each other. In some instances satellites have even collided. A satellite collision usually results in the complete destruction of the satellite which is extremely costly to replace. A satellite collision also contributes to the problem of orbital debris.

In terms of the latter, in the future it is likely that humankind will see increased levels of lunar activity. As competing claims to real estate and mineral rights are a source of ongoing conflict across the planet, there is no reason to assume that, as lunar activity becomes more commonplace, the same will not occur thereon. Indeed, even in the absence of practical private lunar access, there already exist moon claimants, such as found in www.lunarregistry.com

Despite these problems, space will likely continue to remain common property. One reason is that no country has any authority over space. Another reason is that it is difficult for a country to exclude any person who has the necessary means from entering space. Indeed, commercial enterprises such as Virgin Galactic are already booking space passages.

### SUMMARY OF THE INVENTION

Forming one aspect of the invention is an improved Board of Trade, of the type which promulgates a code of acceptable conduct for its members. The improvement comprises: including, in the code, standards of conduct regarding activity in space; and including in the code, on the part of any member having control of a rocket for entering space, an obligation to refrain from assisting any person in activity in violation of the standards of conduct regarding activity in space.

According to another aspect of the invention, the code can prescribe that no member shall assist any non-member in the exploitation of space.

According to another aspect of the invention, the Board of Trade can be operated such that a violation of the code of conduct results in cancellation of membership.

According to another aspect of the invention, the standards can further prescribe that the members shall sanction those who violate the standards.

According to another aspect of the invention, the standards can further prescribe that members shall cease to trade with persons who violate the standards.

According to another aspect of the invention, the standards of conduct regarding activity in space can include standards of conduct regarding the use and operation of satellites.

According to another aspect of the invention, the standards can prescribe that no satellite shall be operated or used to interfere with the operation of another satellite.

According to another aspect of the invention, the standards can prescribe that no satellite shall be used, deployed or operated to interfere with the orbit of another satellite.

According to another aspect of the invention, the standards can prescribe that no satellite shall be deployed that does not have the capability of exiting orbit at the end of its operational life.

According to another aspect of the invention, the standards can prescribe that a satellite shall not enter orbit prior to being assigned an orbital pathway.

According to another aspect of the invention, the standards can further prescribe the promulgation of orbital debris on the part of the membership.

According to another aspect of the invention, the standards can prescribe that no member shall contribute to the creation of orbital debris.

According to another aspect of the invention, the standards can prescribe that a member who contributes to the creation of orbital debris shall remove an equivalent weight of orbital debris.

According to another aspect of the invention, the standards can oblige each member to attorn to the jurisdiction of a decision-making body in respect of the assignment of rights to orbital pathways, lunar surface rights and lunar subsurface rights.

According to another aspect of the invention, the standards can prohibit the deployment of arms in space by members.

Forming another aspect of the invention is a method for promoting the responsible exploitation of space, the method comprising the steps of:
promulgating a code of acceptable conduct regarding activity in space;
including in the code an obligation to sanction persons who violate the code;
including in the code an obligation to refrain from assisting any person in activity in violation of the code; and
including in the code an obligation to refrain from assisting any person in space-related activities who refuses to be bound by the code.

According to another aspect, in the method, the code can be promulgated by a Board of Trade.

Other advantages, features and characteristics of the method, will become more apparent upon consideration of the following detailed description and the appended claims.

### DETAILED DESCRIPTION

The method comprises organizing an improved Board of Trade of the type which prescribes codes of conduct. The method can be implemented by either a newly formed Board of Trade or an existing Board of Trade. The Board of Trade adopts codes of conduct pertaining to activity in space and prohibitions on the part of members relating to the use of rockets in violation of the codes of conduct.

The codes of conduct set standards of behaviour which the members are required to adhere to in relation to activity in space. The codes of conduct may be directed to a number of space activities such as, for example, a member's use of certain orbital pathways or a member's contribution to orbital debris. In an exemplary embodiment, the members are further required under the codes of conduct to ensure that all parties with whom they do business adhere to the standards of behaviour.

The prohibitions prohibit the use of rockets in violation of the codes of conduct. In the exemplary embodiment, members as well as non-members are permitted to use the rockets. In such a case, the prohibitions are applicable to a member who uses a rocket for himself or herself as well as a member who provides a non-member with access to a rocket. However, a member who provides a non-member with access to a rocket will only be responsible for a non-compliant use of the rocket where the member aided or abetted the non-member in the non-compliant use of the rocket or where the member provided a rocket with knowledge that a non-member would make a non-compliant use.

Although some will adhere to the codes of conduct and prohibitions out of a commitment to the ideals expressed therein, ensuring the compliance of others will require the threat of sanction. In an exemplary embodiment, the Board of Trade adopts rules which prescribe that members shall sanction those who violate the codes of conduct. The available sanctions will differ in their nature and severity. The Board of Trade can apply sanctions of increased severity for every subsequent violation of the codes of conduct. The first level of sanction that is applied is that members will completely prohibit the person who violated the codes of conduct from using a rocket. The second level of sanction that is applied is that members will cease to provide goods or services to and purchase goods or services from the person who violated the codes of conduct. It should be understood however that a number of other sanctions which employ the members' collective action can be used to punish those who violate the codes of conduct.

In the case of a newly formed Board of Trade having a single member, the member will adopt the codes of conduct, prohibitions and rules under his or her sole authority. In the case of an existing Board of Trade having a number of members, the members will adopt the codes of conduct, prohibitions and rules in accordance with the rules of the Board of Trade. It should be understood however that a Board of Trade can adopt the codes of conduct and prohibitions in a number of other ways, such as through amalgamation or succession, which will be readily apparent to the person of skill in the art.

The improved method can result in the organization of a Board of Trade which has the ability to regulate activity in space despite the fact that the Board of Trade has no authority over space. It is common knowledge that rockets are presently necessary to enter space. Therefore, by controlling a supply of rockets, the Board of Trade has significant power to restrict entry into space. The power to restrict entry into space provides the Board of Trade with the ability to impose conditions upon the entry of space. As previously discussed, the condition of entry is compliance with the codes of conduct.

For the purpose of the present disclosure and claims, it should be understood that a rocket includes any rocket-engine-powered device.

It will now be apparent that the method is most effective at regulating activity in space when the members of the Board of Trade collectively control a substantial portion of the rockets. Notwithstanding, the method is still effective at regulating activity in space when the members of the Board of Trade collectively control less than a substantial portion of the rockets. It is sufficient to control only an amount of rockets that will apply pressure on the supply of rockets. Accordingly, in an environment where there is an undersupply of rockets, the control of even a single rocket has the ability to regulate some activity in space.

The public good in space will be enhanced when there is compliance with the codes of conduct. One way that the public good can be enhanced is that the codes of conduct will regulate the use of space.

It is known that debris is crowding orbital space. In an exemplary embodiment, the codes of conduct prohibit a person from contributing to the creation of orbital debris and prescribe that a person who creates orbital debris shall remove an equivalent weight of debris from orbit. Minimal compliance with these requirements would reduce the rate of creation of new debris which would reduce the risk of damage to satellites and spaceships in orbit. Complete compliance with these requirements would stop the creation of new orbital debris which would allow natural forces to eliminate existing debris from orbit. Furthermore, the rate at which debris is removed from orbit can be increased by requiring members to remove a minimum amount of debris in a prescribed period of time or a minimum amount of debris with each use of a rocket.

It is similarly known that new satellites must compete for the limited orbital space that is available. This problem is compounded by the existence of orbital debris. The codes of conduct in an exemplary embodiment provide for the assignment of orbital pathways and orbital speeds and vest a decision making body with the authority to assign such rights to an orbit. The assignment of an orbit would grant a satellite the right to a particular orbital pathway and orbital speed. Before a satellite could be put into orbit, it would need to be assigned an orbit and that orbit would not be permitted to unduly trespass on the orbits of others. This could occur, for example, because the pathway crosses many orbits or because the speed causes the satellite to frequently cross certain orbits. By vesting the authority to assign such rights with a decision making body, the interested parties would have the opportunity to advocate for or against the assignment of an orbit. This provides for the orderly use of orbits, as well as creates the possibility for more collaborative uses of orbits. The same applies, pari passu, to the assignment of rights to the lunar surface and to the lunar subsurface.

Furthermore, the codes of conduct in an exemplary embodiment require that satellites of the members be capable of exiting orbit at the end of their useful life. This ensures that unused satellites do not waste precious orbital space which will be even more important in the future as the number of satellites is increased.

Another way that the public good can be enhanced is that the codes of conduct in an exemplary embodiment interfere with the operation of other satellites. As space become more accessible, some will certainly attempt to interfere with the legitimate operations of a satellite. It likely that satellites will be put into orbit which have the ability to, for example, disrupt the communications or intercept the data of other satellites. These prohibitions ensure that satellites remain a useful and reliable technology.

A further way that the public good can be enhanced is that in an exemplary embodiment the codes of conduct prohibit the use of weapon systems and certain surveillance equipment in orbital space. It is well-known that certain satellites in orbit have extensive surveillance capabilities that allow their owners to spy on, for example, private citizens or foreign governments. It also is likely that satellites will be put into orbit which have weapons systems on board. These prohibitions ensure that public safety and privacy are promoted.

A yet further way that the public good can be enhanced is that the codes of conduct can prohibit the destruction and theft of space property. Space property generally requires a substantial investment on the part of the owner to build and orbit. These prohibitions encourage investment in orbital space by ensuring space property is preserved.

In light of the foregoing it will now be appreciated that the method results in the creation of a Board of Trade which enhances the public good in the exploitation of space.

Of course, routine changes to the improved method can be made without affecting the effectiveness of the improved method. In view of the foregoing, it will be understood that the improved method is limited only by the claims appended hereto, purposively construed.

## Claims

1. A method for reducing the creation of orbital debris in a responsible exploitation of space, comprising the steps of:
- determining whether debris is created by a rocket-engine powered device in orbital space,
- if debris is created by the rocket-engine powered device,
- estimating the weight of said created debris, and
- assuring that an equivalent weight of debris is removed from a space orbit in a prescribed amount of time.

2. The method according to claim 1, wherein assuring that said equivalent weight of debris is removed comprises using natural forces to eliminate debris from a space orbit.

3. The method according to claim 1 or 2, wherein assuring that said equivalent weight of debris is removed comprises removing debris from a space orbit but the use of a rocket.

4. The method according to any of claims 1 to 3, wherein the method complies with a code of conduct regarding activity in space.

5. The method according to claim 4, wherein the code is a code of responsible exploitation of space, which is promulgated by a board of trade.
